(19) Europäisches Patentamt
European Patent Office
Office européen des brevets

(11) **EP 2 996 047 A1**

(12) **EUROPEAN PATENT APPLICATION**

(43) Date of publication:
**16.03.2016 Bulletin 2016/11**

(51) Int Cl.:
***G06F 17/30*** (2006.01)

(21) Application number: **14184129.6**

(22) Date of filing: **09.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **FUJITSU LIMITED**
**Kawasaki-shi,**
**Kanagawa 211-8588 (JP)**

(72) Inventors:
• **Lee, Vivian**
**Bracknell, Cambridgeshire RG42 2QP (GB)**
• **Hu, Bo**
**Huntingdon, Cambridgeshire PE29 6JL (GB)**

(74) Representative: **Wilding, Frances Ward**
**Haseltine Lake LLP**
**Lincoln House, 5th Floor**
**300 High Holborn**
**London WC1V 7JH (GB)**

(54) **A method and system for selecting public data sources**

(57) A method of selecting a public data source by dynamically ranking publicly available data sources with respect to a search term, comprising a plurality of ranking processes carried out on the dataset for each data source and including: using metadata for each dataset to rank the datasets by comparing the search term against a dataset information for each source; creating a temporary ranking list of the data sources based on the metadata ranking; measuring availability for each of the data sources and updating the temporary ranking list based on availability; carrying out instance-based ranking based on fitness of the dataset in each data source against the search term to finalise the ranking list and using the finalised ranking list to select one or more data sources.

FIG. 1

# Description

This invention lies in the field of applications in the semantic web, and in particular relates to a way of selecting data sources, a process which may be practiced for example, with data sources providing open linked data (LOD). However the invention addresses data sources in general, as well as the special needs of LOD and other linked data.

Linked data is intended to define a set of standards and best practices for publishing and linking structured data on the Web. Linked data extends the web by providing semantic mark-up of data. LOD envisages a network of knowledge with data semantically annotated using the so-called ontologies which are readable and understandable by both human inspectors and machines.

Open Linked Data (LOD) is thus a paradigm in which linked data from a variety of sources is made available to applications, and, for the purposes of this document, "linked data" and "Open Linked Data" or "LOD" may be used more or less interchangeably. Each data source includes a dataset, which may be information encoded in a defined structure, intended to be useful for machine reading. The dataset may have a hierarchy extending from a top-level division into sections (a partition) down to lower levels.

At the heart of LOD is the Resource Description Framework, RDF, a simple graph-based data modelling language providing semantic mark-up of data and designed specifically for use in the context of the Web.. With RDF, LOD tries to piece data silos together and transform the current archipelagic data landscape into a connected data graph upon which complicated data analytics and business intelligence applications can be built.

One important concept that RDF defines is a predicate called "rdf:type". This is used to say that things are of certain types. The widespread use of rdf:type makes it very convenient.

RDFS (RDF Schema) defines some classes which represent the concept of subjects, objects, predicates etc. This means that statements can be made about classes of thing, and types of relationship. At the most simple level you can state things like http://familyontology.net/1.0#hasFather, which is a relationship between a person and a person. RDF also allows you to describe in human readable text the meaning of a relationship or a class. This is a schema. It tells you legal uses of various classes and relationships. It is also used to indicate that a class or property is a sub-type of a more general type. For example "HumanParent" is a subclass of "Person". "Loves" is a sub-class of "Knows".

For LOD-type and other data sources, the recommendation as to which public data source might be appropriate can be required.

Prior art approaches to public data source selection/recommendation may be either based on string matching/full text search with respect to search criteria, or pure static data quality indicators. These methods can either cause performance overhead if the size of the public data source is large, or only provide potentially out-of-date, static data quality information that is not sufficient to cope with the data source selection requirement at runtime.

It is desirable to define a quality measure for data sources and corresponding quantification methods which are relevant to quality of data sources in the application domain, satisfying requirements raised by such applications.

It is equally desirable for such a quality measure to address both data sources in general and LOD data sources.

According to an embodiment of a first aspect of the invention there is provided a method of selecting a public data source by dynamically ranking publicly available data sources with respect to a search term, comprising a plurality of ranking processes carried out on the datasets for the data sources and including: using metadata for each dataset to rank the datasets by comparing the search term against dataset information for each source; creating a temporary ranking list of the data sources to be ranked based on the metadata ranking; measuring availability for each of the data sources to be ranked and updating the temporary ranking list based on availability; carrying out instance-based ranking based on fitness of the dataset in each data source against the search term to finalise the ranking list and using the finalised ranking list to select one or more data sources.

This embodiment proposes an iterative set of ranking processes which can be carried out in respect to a search term for each of a number of publicly available data sources.

Thus this embodiment proposes a comprehensive quality measure, including suitable methods to quantify quality measurement (as explained in more detail hereinafter). This method allows the recommendation of public data sources based on an application specific ranking list that can hence satisfy user requirements.

The plurality of ranking processes may take place without any pruning of candidates, so that the end result returns all the initial candidate sources, but in a finalised ranking list. In other embodiments, one or more lower-positioned data sources are pruned from the ranking list during the selection process. This pruning or candidate-removal step limits the number of candidates.

Candidate pruning can take place at the end of each individual process, to reduce the computational requirement of the next stage. This can work with the order of ranking processes defined, in which the first process will incur less computation and subsequent pruning can reduce the overall candidate size for the more complicated computations.

The embodiment incorporates not only metadata for each dataset for ranking purposes, but adds data availability and a final process of instance-based ranking to provide a full quantitative assessment and ranking of the public data sources. The search term can be a single word or a string of words. Any kind of query format can be used including the search term. For example it may be a simple expression such as "Fishing Equipment Data" or a more complicated search query may be expressed in query languages such as SPARQL, the language used for RDF queries. If the search query is in SPARQL, it is necessary to extract the main content out of the query.

The method of invention embodiments is dynamic in that it uses current information. Advantageously, information can be continually pulled from data sources to retain data freshness. The data sources may be registered with the selection system.

In one embodiment, the method further comprises probing the datasets for dataset partition information and caching the dataset partition information. A dataset partition can represent the top-most data subgroups that the dataset covers. This provides an indication of what topics the dataset covers and how many data items there may be in a particular division. Hence the partition provides information about the coverage and size of population in a dataset, which can help to demonstrate dataset quality.

The method of invention embodiments may also comprise probing the data sources for availability information and caching the availability information. Availability information is another good indicator of whether the datasource is likely to be of use.

The metadata ranking process can be any that uses metadata, for example LOD metadata, for instance as set out in the Dublin Core ® Metadata Initiative. Any other system of metadata which provides generic resource descriptions may alternatively be used.

In some embodiments, the metadata ranking includes a dataset description comparison which checks for the search term in the title and description of the datasets and provides a description comparison numerical result. For example, text-based string matching can be carried out using typical metadata indicators in the LOD space for a name given to the resource or dataset (title) and account of the resource or dataset (description).

In an efficient development of this dataset description comparison process, it includes creating a first temporary ranking list of ranking data sources with the search term in the title and a second temporary ranking list of data sources without the search term in the title, wherein the second temporary ranking list continues after the lowest rank of the first temporary ranking list.

Additionally or alternatively, the metadata ranking includes: partition based ranking, which checks for distribution of the search term within the dataset partition and provides a partition-based numerical result.

In some embodiments, metadata ranking comprises both processes of datasource description comparison and of partition-based ranking. In this case, the result of the metadata ranking process may be based on a combination of the numerical results of the two processes.

Any suitable way may be used to combine the numerical results, for example a normal or a weighted average (if one measure is more important than the other a higher weight may be given to the more important one). The numerical results in both cases are an indication of a similarity value between the dataset concerned and the search term.

The metadata ranking may be the first process in the method and can be used to select suitable data source candidates in a first instance. These then populate the temporary ranking list which is updated based on measured availability for each of the data sources.

The availability may be measured based on historical availability and/or based on real-time availability.

In one embodiment, measuring availability includes: measuring historical availability for each of the data sources to provide a numerical availability measure. Any suitable methods may be used to provide the numerical availability measure. In some embodiments, the numerical availability measure is based at least in part on a ratio of number of valid responses from a data source to the number of messages sent to that data source over a defined time period.

Hence this ratio may be used alone to define historical availability. Additionally or alternatively, the numerical availability measure may be based at least in part on an algorithm evaluating links to and/or from each data source, preferably the PageRank algorithm.

At this stage in the method, the numerical availability measure may be combined with a numerical result from the metadata ranking to provide a temporary ranking which takes both proximity of the datasets to the search term and probable data source availability into account. The skilled reader will appreciate that there are many variations possible which the skilled person would select from in accordance with the circumstances of the application. For example, the numerical result from the metadata ranking may be that of the datasource description comparison, the partition-based ranking or a combination of the two. Moreover, the numerical availability measure may be based on the ratio discussed above, or on an algorithm evaluating links to and/or from the data sources or both.

In addition to or as an alternative to the process for measuring availability as set out above, measuring availability may include measuring real-time availability for each of the data sources and removing data sources that are not available in real time from the ranking list.

Hence the historical availability providing a numerical availability measure is not always essential but can be replaced by or used in addition to real time availability and removal of data sources not available in real time from the ranking list.

Finally, instance-based ranking takes place. This is to assess the fitness of the dataset by evaluating positions of matches with the search term within a dataset hierarchy. In effect, this fitness assessment is a deep instance-based quality analysis which looks at each level in the hierarchical data model to find out where in the hierarchy the query matches terms in that dataset. A match can include a precise match or a predefined level of similarity.

According to an embodiment of a second aspect of the invention there is provided a public data source selection system operable to dynamically rank publicly available data sources with respect to a search term, by carrying out ranking processes on the datasets for the data sources, the system including: a ranking list registry arranged to store ranking lists of the data sources based on the ranking processes; a metadata ranking component arranged to use metadata for each dataset to rank the datasets by comparing the search term against dataset information for each data source and to store a resultant temporary ranking list in the ranking list registry; an availability measuring component arranged to measure availability for each of the data sources to be ranked and to update the ranking list registry based on availability; an instance-based ranking component arranged to carry out instance based ranking based on fitness of the dataset in each data source to be ranked against the search term to finalise the ranking list, wherein the finalised ranking list in the ranking list registry allows selection of one or more data sources.

Finally, an embodiment of a software aspect relates to software which when executed on a computing apparatus such as a web server or other internet-linked computing apparatus carries out a method according to any of the preceding method claims or any combination of method claims. Furthermore, invention embodiments may include a suite of computer programs which when executed carry out a method as set out hereinbefore.

The invention refers to various components which carry out functions, such as a ranking list registry, metadata ranking component, availability measuring component or instance-based ranking component. Each of these functional components may be realised by hardware configured specifically for carrying out the functionality of the module. The functional modules may also be realised by instructions or executable program code which, when executed by a computer processing unit, causes the computer processing unit to perform the functionality attributed to the functional module. The computer processing unit may operate in collaboration with one or more of memory, storage, I/O devices, network interfaces (either via an operating system or otherwise) and other components of a computing device in order to realise the functionality.

Although the components are defined separately, they may be provided by the same computer hardware. Equally the functionality of a single component may be provided by a plurality of different computing resources.

Although the aspects in terms of the methods and system (or apparatus) have been discussed separately, it should be understood that features and consequences thereof discussed in relation to one aspect are equally applicable to the other aspects. Therefore for example where a method feature is discussed, it is taken for granted that the apparatus embodiment includes a unit or component configured to perform that feature or provide appropriate functionality, and that programs are configured to cause a computing apparatus on which they are being executed to perform said method features.

For example, a usage history cache may be provided which stores history information in the form of availability information. Moreover a partition information cache may be provided to store dataset partition information which is periodically retrieved from the available data sources. Dataset partition information is considered as part of the metadata. Hence its storage can form part of the metadata screening capability and a partition information cache can be provided within the metadata screening module.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

Preferred features of the present invention will now be described, purely by way of example, with reference to the accompanying drawings, in which:-

Figure 1 is a flowchart illustrating a general embodiment of the invention;
Figure 2 is a schematic diagram giving an overview of the system architecture; and
Figure 3 is a schematic diagram of the overall process.

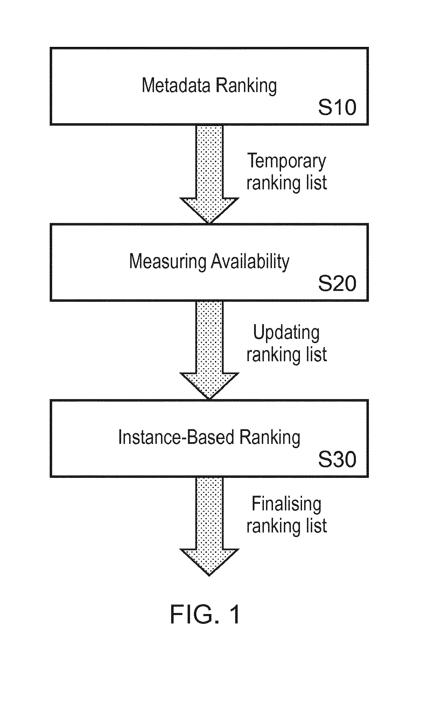

Figure 1 is a flowchart of a general embodiment of the invention showing the three major steps or processes used in the dynamic ranking. Firstly in step S10 there is a ranking process based on metadata, for example LOD metadata. This first ranking process provides an initial temporary ranking list of suitable candidates. The data sources ranked can be any public data sources such as open sources and may or may not be registered. The data sources are available to the public over a computer network such as the internet.

In the second ranking process S20, availability is measured and taken into account to update the ranking list. In the third process S30, instance-based ranking looks directly at the data sources in the ranking list to provide a finalised ranking list.

At any point after each of these processes, pruning can take place to remove candidate data sources ranked low in the list.

Invention embodiments can have some or all of the following key components:

- a multi-stage, dynamic ranking process that can incrementally locate the most suitable dataset without significant performance overhead. This ranking can further contain three key stages;
- a meta-data based ranking mechanism
- an availability (or history based) ranking mechanism; and
- an instance-based dataset quality ranking mechanism.

A combination of these components can help to:

- Identify reliable data sources for fast candidate pruning;
- Rank data sources initially based on metadata so as to reduce search space; and
- Allow deep-analysis of dataset instances for final quality assurance.

To be able to use history information, the system of invention embodiments can continually or continuously pull information from all available data sources. The method can include periodically probing datasets for dataset partition information, caching such information for future analysis. In general dataset partition information is available from LOD metadata. The method can also include periodically probing data sources for availability information, and caching such information for future analysis.

The invention embodiments using history information can work by pulling information from registered data sources. Suitable registration processes are available in the prior art. For example data set publishers can make their data available by exposing the content through services. The registration can either be achieved by the publishers by submitting the metadata and data to a hosting service or a registration area can be populated by web crawlers which collect the metadata and dump into a central repository.

The pulling can be carried out continuously (and thus without pause) or continually (ongoing but with interruptions). The idea is to keep the freshness of the data, and take into account the trade-off between freshness and performance.

When the system receives search requests for data source selection, it can proceed with ranking in the following order:

1. Compare the data source search requests against metadata information such as dataset descriptions and partition information to select the suitable candidates
2. Rank the candidates based on the historical availability information to obtained a refined candidate list
3. Check real-time availability of the refined list
4. Deep-analyse the candidates (for example by searching, in real time a plurality of levels of the dataset hierarchy for similarity to the search term) to obtain the final ranking. In a preferred embodiment, the idea is to compute not one similarity, but a compiled similarity score based on individual similarity values between entities from the dataset and the search term.

This incremental approach can ensure an on-demand quality measurement, reducing analysis overhead, and providing availability of the interim results. The skilled person will appreciate that the ranking steps can each provide a numerical output to allow the data sources to be put into order from the most preferred to the least preferred or alternatively a ranking process can output a yes/no answer to prune the candidates which are not deemed suitable.

Other orders of the above steps are of course feasible, particularly if there is no pruning between the ranking processes because in that case the order need not reflect an increasing complexity of processing, if all the candidates are ranked by each process.

In terms of the types of data sources envisaged, they may be domains, databases, computer files, datastreams or any other public data available over a computer network.

An example of a dataset could be "Fishes of Texas" which is a data set in the specialised area of fishing covering types of fishes and the fishing industry in general. In most cases, data of one or several domains is published. The methods work with domain specific data sets, for example relating to fishing, finance, banking or any other specialised subject area.

The system may be a single server attached to the internet or form part of a larger system. For example it could comprise part of a system used when the user tries to select which datasets they wish to consume for some online applications. However, invention embodiments may also act as a stand-alone service, for example a general web search engine type of tool for publicly available datasets. This could be for example a dataset search facility for open public data.

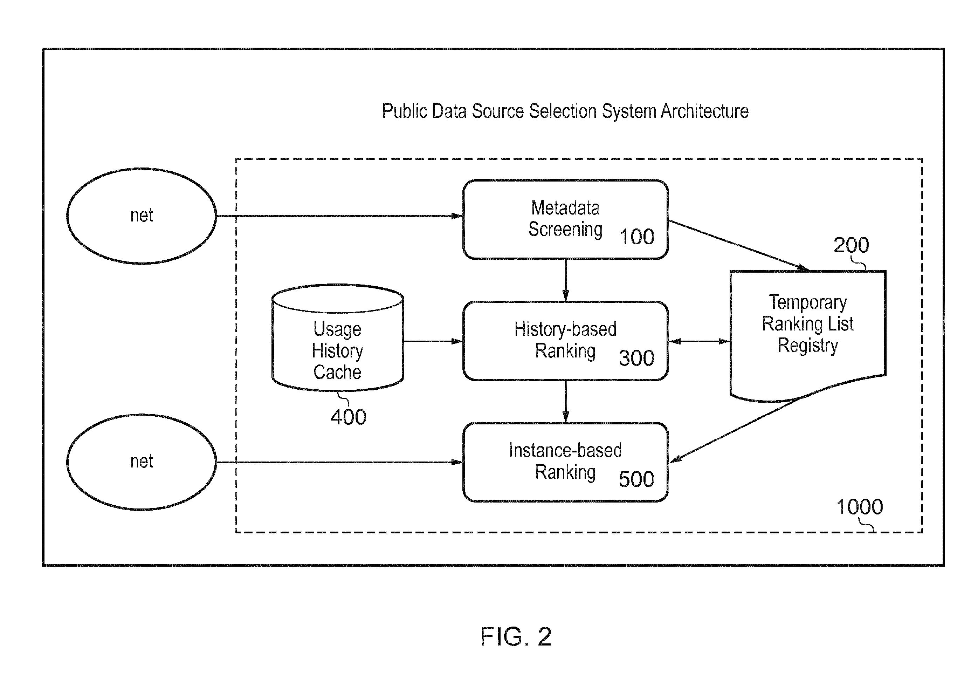

Figure 2 is an example of a system architecture which may be used with invention embodiments for public data source selection. The system is shown as part 1000 delimited by a dashed line. The system is shown as a single entity such as a computing device or server, but may be realised by more than one computing device operating collaboratively.

Metadata screening (or ranking) takes place in metadata screening component 100. Information is fed from the internet to the metadata screening component, for example in the form of metadata for the data sources.. The metadata screening component produces a temporary ranking list which may be stored in the temporary ranking list registry 200. A history based ranking component (or availability ranking component) uses information from the usage history cache 400 to provide further ranking based on the history information stored therein. The history information refers to historical availability. The history based ranking component 300 can obtain the ranking list from the ranking list registry and update the ranking list before restoring it into the registry 200. The final component is the instance-based ranking 500. This component drills information from the internet, allowing a deep search of the datasets. The instance-based ranking component 500 can also obtain and update the ranking list from the registry 200.

All these components are discussed in more detail hereinafter.

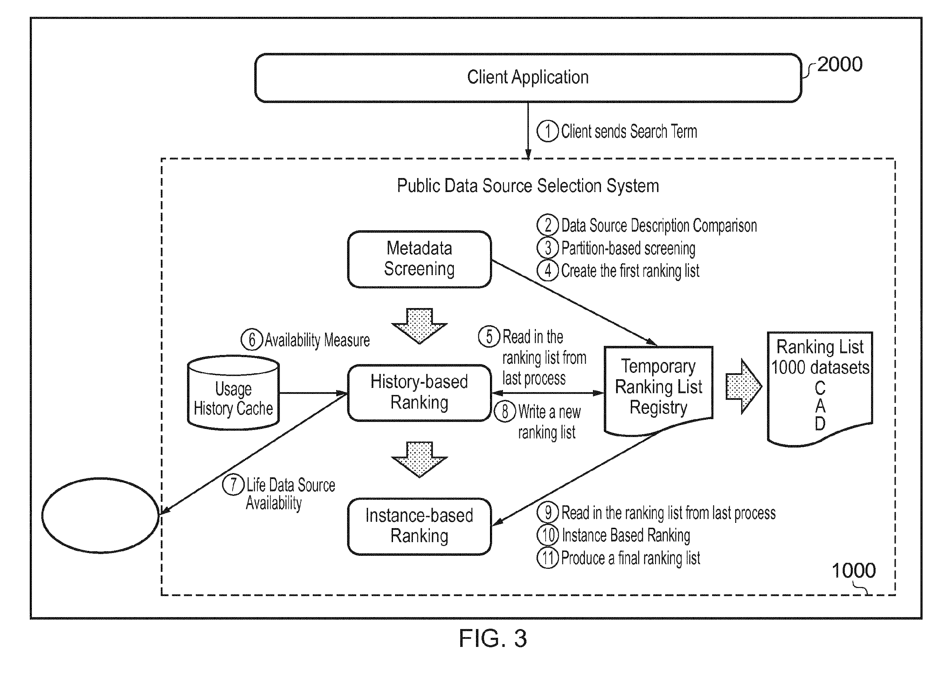

Figure 3 is a diagram illustrating a selection system according to embodiments of the invention and as shown in Figure 2 with an indication of method steps in each of the components and the interaction between the system 1000 and the client application 2000. The processes are indicated by numbers in circles, reproduced in the text as the same numbers in brackets. Initially the client application sends a search term in step (1) to the selection system. In the metadata screening component, there is a datasource description comparison in step (2) and partition based screening in step (3), to create the first ranking list in step (4). In step (5) the history based ranking component reads in the ranking list from the previous process and in step (6) the history based ranking component measures availability using the data in the usage history cache. A live datasource availability check is also carried out in step (7) with reference to the internet or other network allowing access to data sources. These two availability measures having taken place, the history-based data ranking component writes a new ranking list in step (8). Finally, the instance-based ranking component reads in the ranking list from the last process in step (9) and carries out instance-based ranking in step (10). Then a final ranking list is produced in step (11).

Hence there are five main processes that incrementally refine and generate the ranking list with a given search term.

- Data Source Description Comparison
- Partition-based Screening
- Availability Measure
- Live Data Source Availability
- Instance-based Ranking

Through these five steps, the scope of the ranking list (total number of datasets) can be progressively reduced, and the ranking sequence revised to produce more accurate recommendations.

## Metadata Screening Component

This component provides an initial ranking list based on a ranking process against LOD metadata. It has two processes:

- Data Source Description Comparison
- Partition-based Screening

These two processes are further explained as follows:

## Data source Description Comparison

The following metadata are utilised to compare with the search requests:

1. dcterms:title,
2. dcterms:description

In the LOD space, typical metadata indicators include: **dcterms:title, dcterms:description, void:classPartition.** The expressions **dcterms:tltle** and **dcterms:description** are both defined by the Dublin Core Metadata Initiative DCMI, for a name given to the resource, and an account of the resource. The DCMI provides metadata terms to describe web data and provides interoperability. The data type of these two metadata are http://www.w3worg/2000/01/rdf-schema#Literal (the class of literal values such as strings and integers). This allows text based string matching.

The ranking process within this step can be shown as follows, with a given search term **q:** where *tf*() provides term frequency based on similarity between the search term and a dataset.

1. Compare q and **dcterms:title** string as **tf(q, dcterms:title)** to find the term frequency in the title
2. If **tf(q, dcterms:title)>0,** compute the ratio of number of occurrences of **q** to the length of the description **tf(q, dcterms:description)** to **dcterms:description.** Then rank the public data sources according to the term frequency result of the search term **q.**
3. If the search term *q* does not exist in **dcferms:title,** check its existence in **dcterms:description.**
4. Rank the public data sources again according to the **tf** result in **dcterms:description** only.

Hence, the ranking is prioritised by the title. If q is in the title, then those data sources (list_1) will be listed on the top of the table, and within list_1, the ranking will be rearranged by the occurrence of q in the descriptions. The next step after creating the list_1, is to use q to search in descriptions only, this will create list_2 with the same method. A final ranking list is the combination of list_1 + list_2, in which both of them are ordered, and the ranking numbers of list_2 continue from list_1. For example, if list_1 contains 1, 2, 3, the first number in list_2 will start with 4.

**Partition-based screening**

The dataset partition normally reflects the top-level concepts/entities in the datasets. There may be i top partitions $P_i$ in a dataset. For LOD, dataset partitions can be the top-level concepts/classes that covers the rest of lower level concepts and their instances. Such partitions can help to give an overview of the datasets.

Simple partition data can be combined with an additional instance distribution check to assess distribution and hence the domain coverage of the datasource. This is based on the assumptions that a balanced distribution has a better chance of satisfying follow-up queries; and that an unbalanced instance distribution or the existence of a zero instance partition suggests low quality of the datasets.

Instance partition distribution can be obtained off-line through periodical deep dataset analysis or through off-line dataset statistic analysis. The instance partition distribution is part of the metadata. It can be obtained off-line because the calculation of such metadata is not quick. The explanation below is to aid understanding of the equation, for example for $P_i$.

The partition-based quality or more precisely correlation measure can be computed as follows: for partition $P_i$ of dataset D and search term q

$$col(q, D) = \frac{\sum sim(q, P_i) \cdot dis(P_i)}{\sum sim(q, P_i)}$$

In this equation and hereafter, "sim" is any form of similarity calculation and "dis" is any form of dissimilarity calculation. These concepts of similarity and dissimilarity mainly refer to the semantic (dis)similarity among two data items. While there are many ways to measure the similarity, the simplest one is probably compute string distance between the labels or names of data items.

**History-based Ranking Component**

The main purpose of this component is to provide further ranking based on history information stored inside the Usage History Cache, thus injecting more dynamism into the ranking mechanism. History-based ranking reflects the data source's availability in the past and uses such a measure to predict the availability in the near future. This looks mainly into the statistics of whether the data source provided a valid response in the past. Thus this functionality can be derived from the pulling mode, i.e. the availability when the data source is probed.

It consists of two sub-processes:

- Availability Measure
- Live Data Source Availability

**Availability Measure**

This is based on accumulated historical availability. The availability of one data source can rely on at least partly availability of others, due to inter data source references. Therefore, an integral availability scoring mechanism is desirable. The availability predication $avpr(D)$ can be computed in two approaches, which can be used together or as alternatives.

1. Availability is computed as the ratio of how many times the data source replies with a valid response during a predefined (for example, user-defined) time window. The valid response can be a handshaking message or a non-timeout query response. The window can be a sliding one looking backwards from the current point of time. For instance, if for a given time period, out of 100 probing queries, 90 time the data source returned a valid handshaking message, the probability of the data source is available in the future can be simplified as 0.9. This approach assumes that all data sources are independent.

2. Availability is computed as the PageRank algorithm or another similar algorithm to reflect the mutual referencing commonly used in web data. The starting probability can be obtained as above, and standard PageRank model can be applied to converge the influenced probability values.

Hence, step 1 can be used alone. It can also serve as the input to an enhanced model that applies the well-known PageRank approach to reinforce the ranking of sources with good availability and heavy cross referencing.

The result of this dual approach is a numeric value associated with each remaining data source to indicate likelihood of availability of the data source including any data sources that need to be visited when dereferencing its data items.

A combination of the results from the metadata screening (which metadata screening may consist of two parts: description based comparison and partition-based screening) and historical availability (which may follow the dual approach above or just use one of the approaches) and should give us a set of candidates that are close to the request and have a good probability of being available.

**Live Data Source Availability**

Based on the combined value of $f(avpr(D), col(q D))$, the system can check the data source (in the case of LOD, this can be the SPARQL end point) for its real-time availability. Those that are not available will be pruned from the candidate list.

The function f is a simply on-off test. Basically, based on the aggregated ranking from metadata screening and historical availability test, the embodiment shortlists a set of highly ranked data sources. These data sources are periodically tested for their live availabilities through continuous handshaking requests. Due to the high demand on network resource, such a live test is restricted to only a small number of candidates. The live test provides increased dynamism in the ranking method.

## Instance-based Ranking

Deep instance-based quality analysis require instance search into the dataset. Therefore, it is only suitable for a limited number of candidates.

The idea is that for a selected few data sources, more rigorous comparison should be carried out. Here, we leverage the hierarchical structure to see which datasets fit the query better. The assumption is that if the query matches some data high in the hierarchical structure, there is a good chance that more data can become available when we try to evaluate the query and retrieve the data. This is based on the assumption that the data model is hierarchical.

Levels are based on the hierarchical data model, i.e. if we consider the root of the hierarchy as 0, the depth of the data directly connected to the root is 1 and so on as so forth. Fitness explains to what extent the dataset can provide answers to the query. If the query matches many terms high up in the hierarchy, the dataset is considered to fit better with the query, as it can provide more data as the results of query evaluation.

The overall score of fitness of a dataset against a search term can be computed using the variable $\bar{x}$ as follows:

$$fitness(q, D) = -\log \bar{x}$$

where $q$ is the search term, D is the dataset depth is the level in the hierarchy, and $\bar{x}$ can be computed as follows:

$$\bar{x} = \frac{\sum \frac{depth(c_i)}{\max\_depth(D)}}{|c_{\bar{i}}|}$$

where $c_i$ is the set of classes that are considered similar to q with the similarity $sim(c_i, q)$, assuming the dataset has a min-span tree (or subgraph that contains all the vertices).

The computation model tries to reduce the significance of a similarity value based on an increased depth of an entity in the hierarchy. So, if the search term can find a highly similar entity at a shallow depth (towards the top of the hierarchy), the dataset is considered more relevant. A tree model is used for this analysis. Most datasets are based on tree-structure data models (or ontologies). For a graph-like data model, the spanning tree of the graph is required. In practice, "heavy" edge weights are assigned to certain graph edges to get a minimum spanning tree that firstly covers all the graph vertices, secondly covers the edges we would like to include, and thirdly tries to exclude certain graph entities that we do not want to include.

The conclusion is that when analysing the fitness of a dataset against a search term, if the fitness query finds similar data items at a high level of the data structure, the dataset should be given a higher fitness value to indicate that the dataset may have better chance of providing a number of data instances against the given search term.

## Benefits of Invention Embodiments

Prior art public data source selection/recommendation methods are either based on string matching/full text search, or on pure static data quality indicators. These methods will either cause performance overhead if the size of the public data source is large, or only provide potentially out-of-date, static data quality information that is not sufficient to cope with the data source selection requirement at runtime.

Invention embodiments provide a comprehensive quality measure algorithm together with methods to quantify the quality measurement. Embodiments can be able to:

1. Identify reliable data source for fast candidate pruning by using metadata for initial refinement to reduce performance overhead.
2. Leverage historical usage to dynamically rank data source accurately.
3. Provide deep-analysis of dataset instances for final quality assurance

Hence invention embodiments can give a multi-stage, dynamic screening process that can incrementally locate the most suitable dataset without significant performance overhead. The stages can include: a meta-data based screening mechanism; a history based ranking mechanism; and give a public data selection system that is capable of proceeding with a multi-stage ranking process that incrementally shortlists the ranking results in an effective and accurate manner.

The system of invention embodiments can allow: multistage data source recommendation combining shallow metadata analysis and deep instance data analysis; and dynamic recommendation based on domain, availability, data model topology, and fast instance-based analysis.

**Claims**

1. A method of selecting a public data source by dynamically ranking publicly available data sources with respect to a search term, comprising a plurality of ranking processes carried out on the datasets for the data sources and including:

   using metadata for each dataset to rank the datasets by comparing the search term against dataset information for each source;
   creating a temporary ranking list of the data sources to be ranked based on the metadata ranking;
   measuring availability for each of the data sources to be ranked and updating the temporary ranking list based on availability;
   carrying out instance-based ranking based on fitness of the dataset in each data source to be ranked against the search term to finalise the ranking list; and
   using the finalised ranking list to select one or more data sources.

2. A method according to claim 1, wherein one or more lowest data sources are pruned from the ranking list during the selection process, preferably after each ranking process.

3. A method according to claim 1 or 2, further comprising probing the datasets for dataset partition information and caching the dataset partition information.

4. A method according to any of the preceding claims, further comprising probing the data sources for availability information and caching the availability information.

5. A method according to any of the preceding claims, wherein the metadata ranking includes:

   a dataset description comparison which checks for the search term in the title and description of the datasets and provides a description comparison numerical result.

6. A method according to claim 5, wherein the dataset description comparison includes creating a first temporary ranking list of ranking data sources with the search term in the title and a second temporary ranking list of data sources without the search term in the title, wherein the second temporary ranking list continues after the lowest rank of the first temporary ranking list.

7. A method according to any of the preceding claims, wherein the metadata ranking includes:

   partition based ranking, which checks for distribution of the search term within the dataset partition and provides a partition-based numerical result.

8. A method according to any of the preceding claims, wherein the metadata ranking comprises two processes: one of data source description comparison and the other of partition based ranking, and wherein the result of the metadata ranking process is based on a combination of numerical results of the two processes, for example to form a final numerical result as a weighted average.

9. A method according to any of the preceding claims, wherein measuring availability includes:

   measuring historical availability for each of the data sources to provide a numerical availability measure.

10. A method according to claim 9, wherein the numerical availability measure is based at least in part on a ratio of number of valid responses from a data source to the number of messages sent to that data source over a defined time period.

11. A method according to claim 9 or 10 wherein the numerical availability measure is based at least in part on an algorithm evaluating links to and/or from each data source, preferably the PageRank algorithm.

12. A method according to claim 9, 10 or 11, wherein the numerical availability measure is combined with a numerical result from the metadata ranking to provide a temporary ranking which takes both proximity of the datasets to the search term and probable data source availability into account.

13. A method according to any of the preceding claims, wherein measuring availability includes:

   measuring real-time availability for each of the data sources and removing data sources that are not available in real time from the ranking list.

14. A method according to any of the preceding claims, wherein instance-based ranking includes assessing the fitness of the dataset by evaluating the positions of matches with the search term within a dataset hierarchy.

15. A public data source selection system operable to dynamically rank publicly available data sources with respect to a search term, by carrying out ranking processes on the datasets for the data sources, the system including:

a ranking list registry arranged to store ranking lists of the data sources based on the ranking processes;

a metadata ranking component arranged to use metadata for each dataset to rank the datasets by comparing the search term against dataset information for each source and to store a resultant temporary ranking list in the ranking list registry;

an availability measuring component arranged to measure availability for each of the data sources and to update the ranking list registry based on availability;

an instance-based ranking component arranged to carry out instance based ranking based on fitness of the dataset in each data source against the search term to finalise the ranking list; wherein

the finalised ranking list in the ranking list registry allows selection of one or more data sources.

**Amended claims in accordance with Rule 137(2) EPC.**

1. A method of allowing selection of one or more suitable public data source, from publicly available data sources, each including a dataset encoding information in a defined hierarchical structure, the selection taking place by dynamically ranking the publicly available data sources with respect to a search term and by pruning of one or more lowest-positioned candidates during the selection process, the method comprising a plurality of incremental processes carried out on the datasets for the data sources and including:

using metadata in the form of dataset information for each dataset to give a numerical result and rank the datasets by comparing the search term against the dataset information for each source;

creating a temporary ranking list of data source candidates based on the metadata ranking;

measuring availability to give a numerical availability measure for each of the data source candidates, from historical statistics of whether the data source provided a valid response in the past, and updating the temporary ranking list by combining the numerical result from the metadata ranking with the numerical availability measure;

carrying out instance-based ranking based on a fitness value of the dataset in each data source in the updated ranking list against the search term, by evaluating positions of matches with the search term within the dataset hierarchy, to finalise the updated ranking list order to provide a finalised ranking list by additionally applying fitness values.

2. A method according to claim 1, wherein one or more lowest data sources are pruned from the ranking list after each ranking process.

3. A method according to claim 1 or 2, further comprising probing the datasets for dataset partition information and caching the dataset partition information.

4. A method according to any of the preceding claims, further comprising probing the data sources for availability information and caching the availability information.

5. A method according to any of the preceding claims, wherein the metadata ranking includes:

a dataset description comparison which checks for the search term in the title and description of the datasets and provides a description comparison numerical result.

6. A method according to claim 5, wherein the dataset description comparison includes creating a first temporary ranking list of ranking data sources with the search term in the title and a second temporary ranking list of data sources without the search term in the title, wherein the second temporary ranking list continues after the lowest rank of the first temporary ranking list.

7. A method according to any of the preceding claims, wherein the metadata ranking includes:

partition based ranking, which checks for distribution of the search term within the dataset partition and provides a partition-based numerical result.

8. A method according to any of the preceding claims, wherein the metadata ranking comprises two processes: one of data source description comparison and the other of partition based ranking, and wherein the result of the metadata ranking process is based on a combination of numerical results of the two processes, for example to form a final numerical result as a weighted average.

9. A method according to any of the preceding claims, wherein the numerical availability measure is based at least in part on a ratio of number of valid responses from a data source to the number of messages sent to that data source over a defined time period.

10. A method according to claim 9 wherein the numerical availability measure is based at least in part on an algorithm evaluating links to and/or from each data source, preferably the PageRank algorithm.

11. A method according to any of the preceding claims, wherein measuring availability includes:

measuring real-time availability for each of the data sources and removing data sources that are not available in real time from the ranking list.

12. A public data source selection system operable to dynamically rank publicly available data sources, each including a dataset encoding information in a defined hierarchical structure, with respect to a search term, by carrying out incremental ranking processes on the datasets for the data sources and by pruning of one or more lowest-positioned candidates during the selection process, the system including:

a ranking list registry arranged to store ranking lists of the data sources based on the ranking processes;
a metadata ranking component arranged to use metadata in the form of dataset information for each dataset to give a numerical result and rank the datasets by comparing the search term against the dataset information for each source and to store a resultant temporary ranking list of data source candidates based on the metadata ranking in the ranking list registry;
an availability measuring component arranged to measure availability to give a numerical availability measure for each of the data source candidates, from historical statistics of whether the data source provided a valid response in the past, and to update the ranking list registry by combining the numerical result from the metadata ranking with the numerical availability measure;
an instance-based ranking component arranged to carry out instance based ranking based on a fitness value of the dataset in each data source in the updated ranking list against the search term, by evaluating positions of matches with the search term within the dataset hierarchy, to finalise the ranking list order by additionally applying fitness values; wherein the finalised ranking list in the ranking list registry allows selection of one or more suitable data sources.

```
┌─────────────────────────────────┐
│  Metadata Ranking               │
│                          S10    │
└─────────────────────────────────┘
                │  Temporary
                ▼  ranking list
┌─────────────────────────────────┐
│  Measuring Availability         │
│                          S20    │
└─────────────────────────────────┘
                │  Updating
                ▼  ranking list
┌─────────────────────────────────┐
│  Instance-Based Ranking         │
│                          S30    │
└─────────────────────────────────┘
                │  Finalising
                ▼  ranking list
```

FIG. 1

Public Data Source Selection System Architecture

net → Metadata Screening 100

Usage History Cache 400 → History-based Ranking 300

200 Temporary Ranking List Registry

net → Instance-based Ranking 500

1000

FIG. 2

EP 2 996 047 A1

FIG. 3

Europäisches
Patentamt

European
Patent Office

Office européen
des brevets

# EUROPEAN SEARCH REPORT

Application Number

EP 14 18 4129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/238583 A1 (LEHMANN DORON [IL] ET AL) 12 September 2013 (2013-09-12)<br>* paragraph [0002] *<br>* paragraph [0023] *<br>* paragraph [0034] - paragraph [0038] *<br>* paragraph [0040] - paragraph [0041] *<br>* paragraph [0050] * | 1-15 | INV.<br>G06F17/30 |
| X | US 2013/066913 A1 (FLASKO ELISA [US] ET AL) 14 March 2013 (2013-03-14)<br>* paragraph [0006] *<br>* paragraph [0014] *<br>* paragraph [0020] - paragraph [0022] *<br>* paragraph [0028] - paragraph [0039] * | 1-15 | |
| A | US 2004/024745 A1 (JENG JUN-JANG [US] ET AL) 5 February 2004 (2004-02-05)<br>* abstract * *<br>* paragraph [0019] - paragraph [0023] * | 1-15 | |
| A | GIOVANNI TUMMARELLO ET AL: "Sindice.com: Weaving the Open Linked Data",<br>11 November 2007 (2007-11-11), THE SEMANTIC WEB; [LECTURE NOTES IN COMPUTER SCIENCE], SPRINGER BERLIN HEIDELBERG, BERLIN, HEIDELBERG, PAGE(S) 552 - 565, XP019136902,<br>ISBN: 978-3-540-76297-3<br>* the whole document * | 1,15 | **TECHNICAL FIELDS SEARCHED (IPC)**<br><br>G06F |
| A | NICKOLAI TOUPIKOV ET AL: "DING! Dataset Ranking using Formal Descriptions",<br>THE PROCEEDINGS OF THE LINKED DATA ON THE WEB WORKSHOP,<br>20 April 2009 (2009-04-20), XP055136804, Madrid, Spain<br>* the whole document * | 1,15 | |

The present search report has been drawn up for all claims

| Place of search | Date of completion of the search | Examiner |
|---|---|---|
| The Hague | 11 February 2015 | de Castro Palomares |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 18 4129

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2015

| Patent document cited in search report | | Publication date | Patent family member(s) | Publication date |
|---|---|---|---|---|
| US 2013238583 | A1 | 12-09-2013 | NONE | |
| US 2013066913 | A1 | 14-03-2013 | NONE | |
| US 2004024745 | A1 | 05-02-2004 | NONE | |

EPO FORM P0459

For more details about this annex : see Official Journal of the European Patent Office, No. 12/82